# EUROPEAN PATENT SPECIFICATION

(11) **EP 3 335 915 B1**
(45) Date of publication and mention of the grant of the patent: **04.12.2019**
(21) Application number: 16203808.7
(22) Date of filing: 13.12.2016
(51) Int. Cl.: B60F 5/02

(54) **STABILITY CONTROL FOR OPERATION OF A CONVERTIBLE AIR - ROAD VEHICLE**
STABILITÄTSSTEUERUNG ZUM BETRIEB EINES UMWANDELBAREN LUFT-STRASSENFAHRZEUGS
COMMANDE DE STABILITÉ POUR FAIRE FONCTIONNER UN VÉHICULE TRANSFORMABLE POUR USAGE ROUTIER - AÉRIEN

(43) Date of publication of application: 20.06.2018
(73) Proprietor: AeroMobil R&D, s. r. o., 82106 Bratislava-mestska cast Podunajske Biskupice (SK)
(72) Inventor: MACANDREW, Doug, 841 06 Bystrica (SK); ROOMS, Simon, 841 02 Bratislava (SK); ROACH, Alan, 0788 Oslo (NO); CLARK, Ian, Faringdon, SN7 8FA (GB); RANDLE, Steve, Warwick, CV34 6UW (GB)
(74) Representative: Finnegan Europe LLP

(56) References cited:
- US-A- 4 881 700
- US-A- 6 129 306
- US-A1- 2003 094 536
- US-A1- 2011 036 939

## Description

### FIELD OF THE INVENTION

This invention relates to control systems suitable for use on a vehicle configurable for air or road use. Such vehicles are commonly known as flying cars or roadable aircraft (hereafter "flying cars"). In particular, the invention relates to operational control of such a vehicle.

### BACKGROUND

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/032409, WO 2016/057003, WO 2016/057004), and the Moller Skycar (http://moller.com/).

One particular issue faced by flying cars is that the standard control inputs for driving and flying are significantly different. For driving, hand control input is used for steering, and foot control for throttle and brake. For flying, hand control is used for pitch (elevator) and roll (aileron), typically using a stick or yoke, and throttle, and foot control for yaw (rudder), and often for differential wheel braking. It is therefore not possible to provide a single set of control inputs that satisfy regulatory requirements for both air and road uses. In addition, the possibility of operator error becomes high if the same input have different uses depending on mode of use.

WO 2016/057003 discloses one proposal for easily shifting between hand control inputs for air and road use.

US 4 881 700 A discloses a vehicle comprising an engine for use on both road and air, a control wheel for directional control of the wheels on the ground and ailerons in the air use, a throttle pedal for road use, a throttle lever for air use and two pedals to control the rudder in air use.

Other proposals, such as the Terrafugia Transition, provides a complete set of each inputs: both a steering wheel for road use and stick and hand throttle for air use, and two pairs of pedals, an inner pair for road use (throttle and brake), and an outer pair for rudder (yaw) control.

One particular problem encountered by aircraft is that directional control and stability on the ground can be difficult due to the low airspeed over control surfaces. Similarly, differential braking of wheels is only effective where the aircraft is taxiing at some speed. Road vehicles usually have better low speed directional control and braking. However, where there are separate road and flight controls, simultaneous operation is often difficult to achieve safely.

This invention attempts to address at least some of these problems.

### SUMMARY

A first aspect of the invention provides a vehicle having a first configuration for road use ("road use configuration") and a second configuration for air use ("flight configuration"), comprising:
road wheels;
a first steering control input, such as a steering wheel, for directional control of road wheels when in contact with the ground;
a traction drive propulsion unit for driving road wheels when in contact with the ground, for example an electric motor connected to each driven wheel;
a traction drive power control input, such as a throttle pedal;
a second steering control input, such as rudder pedals, for operation of control surfaces for the aerodynamic directional control of the vehicle;
an aerodynamic thrust propulsion unit for driving the vehicle through the air, such as a motor connected to a propeller mounted on the vehicle; and
a thrust power control input, such as a throttle lever; and optionally
a road wheel brake control input, such as a brake pedal;
wherein, when the vehicle is in the second configuration and the wheels are in contact with the ground, the thrust power control input is operable to control power to the aerodynamic thrust propulsion unit and to the traction drive propulsion unit to accelerate the vehicle; and both the first steering control input and the second steering control input are operable to control the direction of travel of the vehicle.

The road wheels under the control of the first steering input can be at the front of the vehicle and can also be driven by the traction drive unit.

A throttle lever can be configured such that movement to a first side of a idle position acts to vary the power to the thrust propulsion unit, and operation to a second side of the idle position acts to vary braking effort applied to the road wheels. In one example, when the lever is operated on the first side of the idle position, the second steering control input is configured to apply steering control to the road wheels by vectoring torque to the drive road wheels.

In some embodiments, the thrust power control input can be configured to variably control power to the traction drive propulsion unit according to the airspeed of the vehicle.

In some embodiments, the first steering control input can be configured to be operable only when the road wheels are in contact with the ground.

In some embodiments, the road wheels are moveable between a first, extended position for use when the vehicle is in the first configuration, or is in the second configuration and the road wheels are in contact with the ground; and a second, retracted position for use when the vehicle is in the second configuration and in flight.

Another aspect of the invention provides a method of operating a vehicle according to the first aspect, comprising:
placing the vehicle in the second configuration with the road wheels in contact with the ground;
in one mode of operation, using the thrust power control input to control power from both the thrust propulsion unit and the traction drive propulsion unit to control the speed of the vehicle on the ground while controlling direction of travel on the ground using the first steering control input; and
in another mode of operation, using the thrust power control input to control power from the thrust propulsion unit to control the airspeed of the vehicle while controlling direction of travel using the second steering control input.

A still further aspect of the invention provides a method of operating a vehicle according to the first aspect comprising:
placing the vehicle in the second configuration wherein the road wheels are initially not in contact with the ground;
in one mode of operation, using the thrust power control input to control power from the thrust propulsion unit to control the airspeed of the vehicle while controlling direction of travel using the second steering control input so as to bring the road wheels into contact with the ground; and
in another mode of operation wherein the road wheels are in contact with the ground, using the thrust power control input to control power from both the thrust propulsion unit and the traction drive propulsion unit to control the speed of the vehicle on the ground while controlling direction of travel on the ground using the first steering control input.

Both methods can further comprise using the thrust power control input to apply a braking force to the road wheels when the road wheels are in contact with the ground; and/or using the second steering control input to the road wheels.

The vehicle can comprise a body, wings connected to the body and moveable between a folded position for the first configuration and an extended position for the second configuration, a tail section at the rear of the body, and moveable control surfaces for controlling operation of the vehicle in the air.

Further variations can be made within the scope of the invention.

### DRAWINGS

Figure 1 shows a perspective view of a flying car in a flight configuration;
Figure 2 shoes a front perspective view of a flying car in a road use configuration; and
Figures 3 and 4 shows schematic views of the control layout of the flying car of Figures 1 and 2 when configured for road use and for flight.

### DETAILED DESCRIPTION

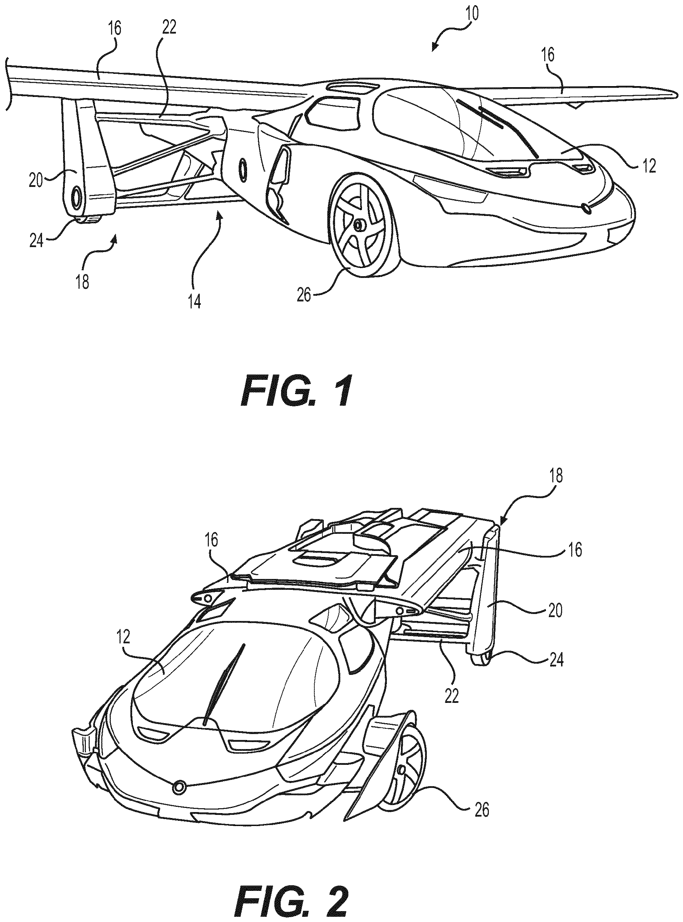

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a main motor (not shown) and propeller shaft (not shown) that extends from the main motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/032409.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use. Drive is provided to the front wheels by means of electric motors (not shown) that are provided with power from the motor. There is one electric motor for each front wheel 26. The electric motors can be driven together, or can be controlled to provide different or vectors drive to each wheel, assisting in stability and steering.

In flight use, the main motor is used to drive the propeller and provide thrust.

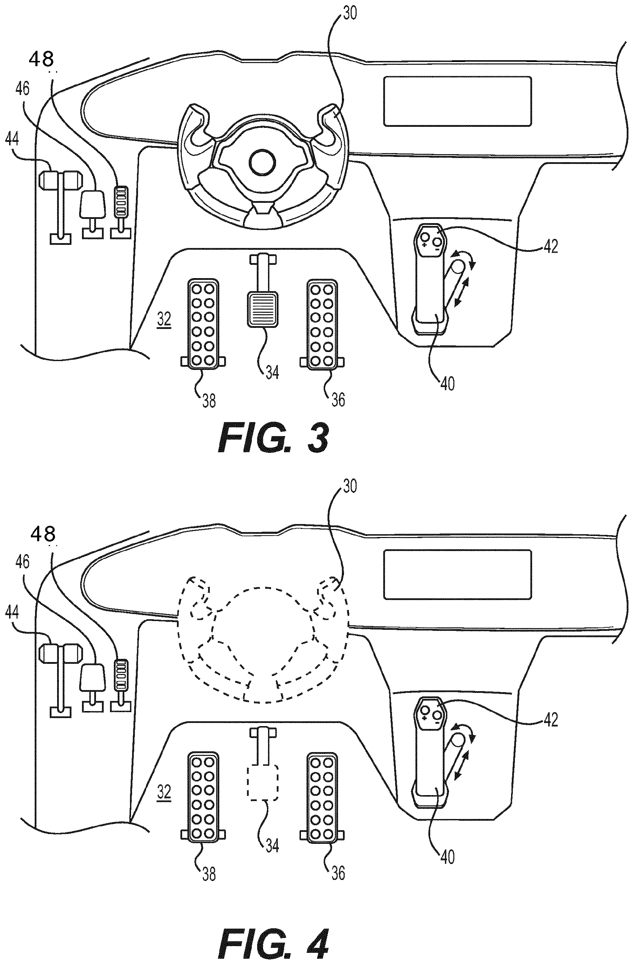

Figure 3 shows a partial view inside the crew compartment 12 when the vehicle is configured for road use. A steering wheel 30 is positioned in a conventional configuration ahead of a driver/pilot seat (not shown). In road use configuration (Figure 2), the steering wheel 30 operates the front wheels 26 in a conventional manner.

A three pedal arrangement is provided in a foot well 32 below the steering wheel 30. The pedals comprise a central brake pedal 34, and first and second side pedals 36, 38. The brake 34 acts on both the front and rear wheels 24, 26. In a first configuration for road use (Figure 2), the first side pedal 36 is configured as a throttle pedal and operates in the conventional foot-controlled manner to apply power to the driven front wheels 26. For example, as the front wheels are driven by electric motors, the throttle pedal 36 acts to control the current provided to the motors. In this configuration, the second side pedal 38 is fixed in position and acts as a foot rest.

Figure 4 shows the corresponding view to Figure 3 when in a second configuration for flight use (Figure 1). In this case the pedals are reconfigured so that the throttle function of the first side pedal 36 is disconnected, and the second side pedal 38 is released from its fixed position. The two side pedals 36, 38 are connected to yaw control surfaces (rudders) on the tail 20, and arranged to operate so that depressing the first (right) side pedal 36 will cause the vehicle to yaw right, and depressing the second (left) side pedal 38 will cause the vehicle to yaw left. The brake pedal 34 can remain active for use on the wheels 24, 26 when taxiing while the vehicle is still in flight configuration.

To the right of the steering wheel 30 is a side stick control column 40 which is connected to roll and pitch control surfaces (ailerons and elevators) on the wings 16 and tail 22 for use in flight configuration (Figure 1). Pitch trim control buttons 42 are provided on top of the side stick 40. In road use, the side stick 40 is inactive.

Levers for throttle 44, flap setting 46, and landing gear deployment 48 are located to the left of the steering wheel. In normal road use configuration (Figure 2), these are inactive. In air use configuration (Figure 1), these levers operate in a conventional manner on engine flap and landing gear mechanisms.

In take-off and landing situations, it is possible to use aspects of one or other control configuration to assist in maintaining stability of the vehicle as it transitions between air and ground use. For example, it is possible to use aspects of road use control when the vehicle is on the ground and aerodynamic control is less effective due to low airspeed over control surfaces. It is also possible to utilize certain aspects of control inputs from one mode in another as will be described in more details below.

For example, when the vehicle is configured for flight use but is still on the ground, the control inputs are configured such that the pedals 36, 38 are configured as rudder pedals and the steering wheel 30 is still operable to steer the front wheels 26. In addition, the throttle lever 44 is configured to operate both the main motor to drive the propeller and the electric motors driving the from wheels 26. Therefore, at an early stage, when airspeed over the rudders is still too low to be immediately effective, the steering wheel can be used to ensure that the vehicle remains pointed in the correct direction as the speed begins to build, in addition to any rudder input from the pedals 36, 38. Once the airspeed is sufficient for effective aerodynamic control, as may be indicated by the "feel" of the controls, by indicator lights, buzzers, etc., the operator can release the steering wheel and assume normal flight control using only the side stick 40 and rudder pedals 36, 38. Power control to the front wheels 26 can be made inactive by use of a speed sensor, or by a load detectors indicating that the wheels are no longer in contact with the ground. In addition, power application at the wheels can be made speed dependent so that for a given throttle setting, the power to the wheels reduces as the speed increases.

Once the vehicle is airborne, the operator can retract the wheels by operation of level 48, at which time the possibility of steering or power inputs to the wheels can be disabled completely.

The brake pedal 34 can remain active at all times. In addition to operation of physical braking systems, operation of the foot brake can also be effective to disable electric drive to the front wheels 26.

When landing, the wheels can be lowered by operation of the lever 48. Operation on approach is in the conventional manner. However, once the wheels are in contact with the ground, a combined mode operation again becomes possible. The throttle lever 44 is provided with a detent towards the rear of its travel, the detent defining the normal idle position. In flight use, operation of the throttle is ahead of the detent/idle position, the throttle being pushed forward to increase power and pulled back to decrease power. With the vehicle on the ground, pulling the throttle lever back past the detent leaves the motor at idle setting, but progressively applies braking to the road wheels. This is in addition to any braking applied using the brake pedal 34. Thus the operator can retain full control of attitude using the side stick 40 and rudder pedals 36, 38 while having additional braking available.

In the reverse of the takeoff procedure, the steering wheel can become active once landing is detected and the speed is at a level where aerodynamic steering becomes more difficult. At such speeds, the wings will be providing little lift and other control surfaces become less effective, meaning that the side stick 40 can ultimately be left unattended without loss of vehicle control. In addition, full control can be maintained with two-handed operation.

In a variant of these operations, the rudder pedals 36, 38 can also be used to control the wheel motors to provide torque vectoring at the wheel electric motors and so aid directional control while on the ground. The steering angle provided by such vectoring can be under speed sensor control. Torque vectoring can be disabled completely where the speed sensor indicates that full aerodynamic control is possible. Torque vectoring would also be disabled when braking is applied via the throttle lever 44 in the manner described above. Torque vectoring is an additional feature to other commonly used safety systems, e.g. ABS (AntiLock Braking System), EBC (Emergency Brake Control), etc.

Changes can be made while remaining within the scope of the invention. Control surfaces can be operated using cable and/or rod linkages. Propeller pitch control can be manual or automatic. Gear section for road use is automatic or CVT. Road throttle control can be electrical/electronic, and braking can be mechanical/hydraulic as is conventional for road vehicles.

## Claims

1. A vehicle having a first configuration for road use and a second configuration for air use, comprising:
road wheels (24, 26);
a first steering control input (30) for directional control of road wheels (24, 26) when in contact with the ground;
a traction drive propulsion unit for driving road wheels (24, 26) when in contact with the ground;
a traction drive power control input (36, 38);
a second steering control input (36, 38) for operation of control surfaces for the aerodynamic directional control of the vehicle;
an aerodynamic thrust propulsion unit for driving the vehicle through the air; and
a thrust power control input (44);
wherein, when the vehicle is in the second configuration and the wheels (24, 26) are in contact with the ground, the thrust power control input (44) is operable to control power to the aerodynamic thrust propulsion unit and to the traction drive propulsion unit to accelerate the vehicle; and both the first steering control input (30) and the second steering control input (36, 38) are operable to control the direction of travel of the vehicle.

2. A vehicle as claimed in claim 1, wherein the road wheels (26) under the control of the first steering input are at the front of the vehicle and are also driven by the traction drive propulsion unit.

3. A vehicle as claimed in claim 1 or 2, wherein the traction drive propulsion unit comprises an electric motor connected to each driven wheel.

4. A vehicle as claimed in claim 1, 2, or 3, wherein the first steering control input comprises a steering wheel (30).

5. A vehicle as claimed in any preceding claim, wherein the traction drive power input, and/or the second steering control input comprises one or more pedals (36, 38).

6. A vehicle as claimed in any preceding claim, wherein the thrust power control input comprises a hand-operated throttle lever (44).

7. A vehicle as claimed in claim 6, wherein the throttle lever (44) is configured such that movement to a first side of an idle position acts to vary the power to the thrust propulsion unit, and operation to a second side of the idle position acts to vary braking effort applied to the road wheels (24, 26).

8. A vehicle as claimed in claim 7, wherein when the throttle lever (44) is operated on the first side of the idle position, the second steering control input is configured to apply steering control to the road wheels (24, 26) by vectoring torque to the drive road wheels (24, 26).

9. A vehicle as claimed in any preceding claim, wherein the thrust power control input is configured to variably control power to the traction drive propulsion unit according to the airspeed of the vehicle.

10. A vehicle as claimed in any preceding claim, wherein the first steering control input is configured to be operable only when the road wheels (24, 26) are in contact with the ground.

11. A vehicle as claimed in any preceding claim, wherein the road wheels (24, 26) are moveable between a first, extended position for use when the vehicle is in the first configuration, or is in the second configuration and the road wheels (24, 26) are in contact with the ground; and a second, retracted position for use when the vehicle is in the second configuration and in flight.

12. A vehicle as claimed in any preceding claim, further comprising a road wheel brake control input.

13. A method of operating a vehicle as claimed in any preceding claim, comprising:
placing the vehicle in the second configuration with the road wheels (24, 26) in contact with the ground;
in one mode of operation, using the thrust power control input to control power from both the thrust propulsion unit and the traction drive propulsion unit to control the speed of the vehicle on the ground while controlling direction of travel on the ground using the first steering control input; and
in another mode of operation, using the thrust power control input to control power from the thrust propulsion unit to control the airspeed of the vehicle while controlling direction of travel using the second steering control input.

14. A method of operating a vehicle as claimed in any of claims 1-12, comprising:
placing the vehicle in the second configuration wherein the road wheels (24, 26) are initially not in contact with the ground;
in one mode of operation, using the thrust power control input to control power from the thrust propulsion unit to control the airspeed of the vehicle while controlling direction of travel using the second steering control input so as to bring the road wheels (24, 26) into contact with the ground; and
in another mode of operation wherein the road wheels (24, 26) are in contact with the ground, using the thrust power control input to control power from both the thrust propulsion unit and the traction drive propulsion unit to control the speed of the vehicle on the ground while controlling direction of travel on the ground using the first steering control input.

15. A method as claimed in claim 13 or 14, further comprising
using the thrust power control input to apply a braking force to the road wheels (24, 26) when the road wheels (24, 26) are in contact with the ground; and/or
using the second steering control input to the road wheels (24, 26).

## Patentansprüche

1. Fahrzeug mit einer ersten Konfiguration für die Verwendung auf der Straße und einer zweiten Konfiguration für die Verwendung in der Luft, umfassend:
Straßenräder (24, 26);
eine erste Lenksteuereingabe (30) zur Richtungssteuerung der Straßenräder (24, 26), wenn sie mit dem Boden in Kontakt sind;
eine Traktionsgetriebevortriebseinheit zum Antreiben der Straßenräder (24, 26), wenn sie mit dem Boden in Kontakt sind;
eine Traktionsgetriebeleistungssteuereingabe (36, 38); eine zweite Lenksteuereingabe (36, 38) zum Betrieb von Steueroberflächen zur aerodynamischen Richtungssteuerung des Fahrzeugs;
eine aerodynamische Schubvortriebseinheit zum Antreiben des Fahrzeugs durch die Luft; und
eine Schubleistungssteuereingabe (44);
wobei, wenn das Fahrzeug in der zweiten Konfiguration ist und die Räder (24, 26) in Kontakt zum Boden sind, die Schubleistungssteuereingabe (44) betrieben werden kann, um die Leistung an die aerodynamische Schubvortriebseinheit und die Traktionsgetriebevortriebseinheit zu steuern, um das Fahrzeug zu beschleunigen; und sowohl die erste Lenksteuereingabe (30) als auch
die zweite Lenksteuereingabe (36, 38) betrieben werden können, um die Fahrtrichtung des Fahrzeugs zu steuern.

2. Fahrzeug nach Anspruch 1, wobei die Straßenräder (26) unter der Steuerung der ersten Lenkeingabe an der Vorderseite des Fahrzeugs sind und ebenfalls durch die Traktionsgetriebevortriebseinheit angetrieben werden.

3. Fahrzeug nach Anspruch 1 oder 2, wobei die Traktionsgetriebevortriebseinheit einen Elektromotor umfasst, der mit jedem angetriebenen Rad verbunden ist.

4. Fahrzeug nach Anspruch 1, 2, oder 3, wobei die erste Lenksteuereingabe ein Lenkrad (30) umfasst.

5. Fahrzeug nach einem der vorstehenden Ansprüche, wobei die Traktionsgetriebeleistungseingabe und/oder die zweite Lenksteuereingabe ein oder mehrere Pedale (36, 38) umfasst.

6. Fahrzeug nach einem der vorstehenden Ansprüche, wobei die Schubleistungssteuereingabe einen handbetriebenen Gashebel (44) umfasst.

7. Fahrzeug nach Anspruch 6, wobei der Gashebel (44) so konfiguriert ist, dass eine Bewegung zu einer ersten Seite einer Leerlaufposition so wirkt, dass die Leistung an die Schubvortriebseinheit variiert wird, und ein Betrieb zu einer zweiten Seite der Leerlaufposition wirkt, um den auf die Straßenräder (24, 26) angelegten Bremsaufwand zu variieren.

8. Fahrzeug nach Anspruch 7, wobei, wenn der Gashebel (44) auf der ersten Seite der Leerlaufposition betrieben wird, die zweite Lenksteuereingabe konfiguriert ist, um Lenksteuerung auf die Straßenräder (24, 26) anzulegen, indem Drehmoment an die Antriebsstraßenräder (24, 26) vektoriert wird.

9. Fahrzeug nach einem der vorstehenden Ansprüche, wobei die Schubleistungssteuerungseingabe konfiguriert ist, um die Leistung an die Traktionsgetriebevortriebseinheit entsprechend der Luftgeschwindigkeit des Fahrzeugs variabel gesteuert wird.

10. Fahrzeug nach einem der vorstehenden Ansprüche, wobei die erste Lenksteuereingabe konfiguriert ist, um nur betrieben werden zu können, wenn die Straßenräder (24, 26) in Kontakt zum Boden sind.

11. Fahrzeug nach einem der vorstehenden Ansprüche, wobei die Straßenräder (24, 26) zwischen einer ersten, ausgefahrenen Position zur Verwendung, wenn das Fahrzeug in der ersten Konfiguration ist, oder wenn es in der zweiten Konfiguration ist und die Straßenräder (24, 26) in Kontakt zum Boden sind; und einer zweiten, eingezogenen Position zur Verwendung, wenn das Fahrzeug in der zweiten Konfiguration und im Flug ist, bewegt werden können.

12. Fahrzeug nach einem der vorstehenden Ansprüche, ferner umfassend eine Straßenradbremssteuereingabe.

13. Verfahren zum Betreiben eines Fahrzeugs nach einem der vorstehenden Ansprüche, umfassend:
Platzieren des Fahrzeugs in die zweite Konfiguration mit den Straßenrädern (24, 26) in Kontakt zum Boden;
in einem Betriebsmodus, Verwenden der Schubleistungssteuereingabe zum Steuern der Leistung sowohl von der Schubvortriebseinheit und der Traktionsgetriebevortriebseinheit, um die Geschwindigkeit des Fahrzeugs auf dem Boden zu steuern, während die Fahrtrichtung auf dem Boden mithilfe der ersten Lenksteuereingabe gesteuert wird; und
in einem anderen Betriebsmodus, Verwenden der Schubleistungssteuereingabe zum Steuern der Leistung von der Schubvortriebseinheit, um die Luftgeschwindigkeit des Fahrzeugs zu steuern, während die Fahrtrichtung mithilfe der zweiten Lenksteuereingabe gesteuert wird.

14. Verfahren zum Betreiben eines Fahrzeugs nach einem der Ansprüche 1 bis 12, umfassend:
Platzieren des Fahrzeugs in die zweite Konfiguration, wobei die Straßenräder (24, 26) anfangs nicht im Kontakt zum Boden sind;
in einem Betriebsmodus, Verwenden der Schubleistungssteuereingabe zum Steuern der Leistung von der Schubvortriebseinheit, um die Luftgeschwindigkeit des Fahrzeugs zu steuern, während die Fahrtrichtung mithilfe der zweiten Lenksteuereingabe gesteuert wird, um die Straßenräder (24, 26) in Kontakt zum Boden zu bringen; und
in einem anderen Betriebsmodus, indem die Straßenräder (24, 26) in Kontakt zum Boden sind, Verwenden der Schubleistungssteuereingabe zum Steuern der Leistung sowohl von der Schubvortriebseinheit und der Traktionsgetriebevortriebseinheit, um die Geschwindigkeit des Fahrzeugs auf dem Boden zu steuern, während die Fahrtrichtung auf dem Boden mithilfe der ersten Lenksteuereingabe gesteuert wird.

15. Verfahren nach Anspruch 13 oder 14, ferner umfassend
Verwenden der Schubleistungssteuereingabe, um eine Bremskraft auf die Straßenräder (24, 26) anzuwenden, wenn die Straßenräder (24, 26) in Kontakt zum Boden sind; und/oder Verwenden der zweiten Lenksteuereingabe an die Straßenräder (24, 26).

## Revendications

1. Véhicule possédant une première configuration pour un usage routier et une seconde configuration pour un usage aérien, comprenant :
des roues de route (24, 26) ;
une première entrée de commande de direction (30) destinée à la commande directionnelle des roues de route (24, 26) lorsqu'elles sont en contact avec le sol ;
une unité de propulsion d'entraînement de traction destinée à entraîner des roues de route (24, 26) lorsqu'elles sont en contact avec le sol ;
une entrée de commande de puissance d'entraînement de traction (36, 38) ; une seconde entrée de commande de direction (36, 38) pour le fonctionnement de surfaces de commande pour la commande directionnelle aérodynamique du véhicule ;
une unité de propulsion de poussée aérodynamique pour entraîner le véhicule à travers les airs ; et
une entrée de commande de puissance de poussée (44) ;
lorsque le véhicule est dans la seconde configuration et que les roues (24, 26) sont en contact avec le sol, l'entrée de commande de puissance de poussée (44) servant à commander la puissance de l'unité de propulsion de poussée aérodynamique et de l'unité de propulsion d'entraînement de traction pour accélérer le véhicule ; et la première entrée de commande de direction (30) et
la seconde entrée de commande de direction (36, 38) servant à commander la direction de déplacement du véhicule.

2. Véhicule selon la revendication 1, lesdites roues de route (26) sous la commande de la première entrée de direction étant à l'avant du véhicule et étant également entraînées par l'unité de propulsion d'entraînement de traction.

3. Véhicule selon la revendication 1 ou 2, ladite unité de propulsion d'entraînement de traction comprenant un moteur électrique raccordé à chaque roue entraînée.

4. Véhicule selon la revendication 1, 2 ou 3, ladite première entrée de commande de direction comprenant un volant (30).

5. Véhicule selon l'une quelconque des revendications précédentes, ledit entrée de puissance d'entraînement de traction et/ou ladite seconde entrée de commande de direction comprenant une ou plusieurs pédales (36, 38).

6. Véhicule selon l'une quelconque des revendications précédentes, ladite entrée de commande de puissance de poussée comprenant un levier d'accélérateur (44) actionné manuellement.

7. Véhicule selon la revendication 6, ledit levier d'accélérateur (44) étant conçu de sorte qu'un mouvement vers un premier côté d'une position de ralenti agit pour faire varier la puissance de l'unité de propulsion de poussée, et qu'un actionnement vers un second côté de la position de ralenti agit pour faire varier l'effort de freinage appliqué aux roues de route (24, 26).

8. Véhicule selon la revendication 7, lorsque le levier d'accélérateur (44) est actionné sur le premier côté de la position de ralenti, ladite seconde entrée de commande de direction étant conçue pour appliquer une commande de direction aux roues de route (24, 26) par vectorisation du couple aux roues de route (24, 26) entraînées.

9. Véhicule selon l'une quelconque des revendications précédentes, ladite entrée de commande de puissance de poussée étant conçue pour commander variablement la puissance de commande de l'unité de propulsion d'entraînement de traction selon la vitesse air du véhicule.

10. Véhicule selon l'une quelconque des revendications précédentes, ladite première entrée de commande de direction étant conçue pour pouvoir fonctionner uniquement lorsque les roues de route (24, 26) sont en contact avec le sol.

11. Véhicule selon l'une quelconque des revendications précédentes, lesdites roues de route (24, 26) peuvent être déplacées entre une première position étendue destinée à être utilisée lorsque le véhicule est dans la première configuration ou est dans la seconde configuration et que les roues de route (24, 26) sont en contact avec le sol ; et une seconde position rétractée destinée à être utilisée lorsque le véhicule est dans la seconde configuration et en vol.

12. Véhicule selon l'une quelconque des revendications précédentes, comprenant en outre une entrée de commande de frein de roue de route.

13. Procédé de fonctionnement d'un véhicule selon l'une quelconque des revendications précédentes, comprenant :
le positionnement du véhicule dans la seconde configuration avec les roues de route (24, 26) en contact avec le sol ;
dans un mode de fonctionnement, l'utilisation de l'entrée de commande de puissance de poussée pour commander la puissance provenant de l'unité de propulsion de poussée et de l'unité de propulsion d'entraînement de traction pour commander la vitesse du véhicule au sol tout en commandant la direction de déplacement au sol à l'aide de la première entrée de commande de direction ; et
dans un autre mode de fonctionnement, l'utilisation de l'entrée de commande de puissance de poussée pour commander la puissance provenant de l'unité de propulsion de poussée pour commander la vitesse air du véhicule tout en commandant la direction de déplacement à l'aide de la seconde entrée de commande de direction.

14. Procédé de fonctionnement d'un véhicule selon l'une quelconque des revendications 1 à 12, comprenant :
le positionnement du véhicule dans la seconde configuration, lesdites roues de route (24, 26) n'étant initialement pas en contact avec le sol ;
dans un mode de fonctionnement, l'utilisation de l'entrée de commande de puissance de poussée pour commander la puissance provenant de l'unité de propulsion de poussée pour commander la vitesse air du véhicule tout en commandant la direction de déplacement à l'aide de la seconde entrée de commande de direction de façon à amener les roues de route (24, 26) en contact avec le sol ; et
dans un autre mode de fonctionnement, lesdites roues de route (24, 26) étant en contact avec le sol, l'utilisation de l'entrée de commande de puissance de poussée pour commander la puissance provenant de l'unité de propulsion de poussée et de l'unité de propulsion d'entraînement de traction pour commander la vitesse du véhicule au sol tout en commandant la direction de déplacement au sol à l'aide de la première entrée de commande de direction.

15. Procédé selon la revendication 13 ou 14, comprenant en outre
l'utilisation de l'entrée de commande de puissance de poussée pour appliquer une force de freinage sur les roues de route (24, 26) lorsque les roues de route (24, 26) sont en contact avec le sol ; et/ou l'utilisation de la seconde entrée de commande de direction pour les roues de route (24, 26).
